# EUROPEAN PATENT APPLICATION

(11) **EP 3 550 217 A1**
(43) Date of publication of application: **09.10.2019**
(21) Application number: 16923296.4
(22) Date of filing: 05.12.2016
(51) Int. Cl.: F24F 13/08

(54) **ENERGY-SAVING MEMBER AND ENERGY-SAVING METHOD**

(71) Applicant: Persh. Inc, Nagoya-shi, Aichi 461-0004 (JP)
(72) Inventor: SUZUKI, Takashi, Nagoya-shi Aichi 465-0053 (JP)
(74) Representative: Banse & Steglich Patentanwälte PartmbB
(86) International application number: PCT/JP2016/088005
(87) International publication number: WO 2018/105130

(57) **Abstract**

A sheet-shaped energy-saving assembly(100) comprising a first surface and a second surface(130), formed with a hole(120) penetrating through the first surface and the second surface(130) and formed of a first material and a first ceramic that emits far infrared ray, is installed on an exterior side of a suction port(210) of an air-conditioning apparatus(200). The first ceramic contains SiO₂, Fe₂O₃, Al₂O₃, MgO and CaO. Thus, the increasing power consumption of the air-conditioning apparatus(200) can be suppressed when the ventilation is deteriorated due to internal contamination.

## Description

### FIELD OF THE INVENTION

The present invention relates to an energy-saving assembly and an energy-saving method.

### BACKGROUND OF THE INVENTION

A prior art of air-conditioning apparatus is well-known as an apparatus that adjusts the air temperature of, for example, a demonstration shelf in a food market or in a building.

Such air-conditioning apparatus is equipped with an energy-saving assembly to achieve the goal of energy saving or is equipped with an optional energy-saving assembly after the apparatus is installed. For example, a water-spraying energy-saving assembly is known as an optional energy-saving assembly that sprays water on a heat exchanger of an outdoor unit of an air-conditioning apparatus to improve the heat exchange efficiency of the heat exchanger. In addition, an air direction switching assembly is known as another optional energy-saving assembly that switches a blowing direction of exhaust air expelled from the outdoor unit of the air-conditioning apparatus to improve the heat exchange efficiency of the heat exchanger. Moreover, an energy-saving control assembly is known as another optional energy-saving assembly that performs energy-saving control by enabling the apparatus to be intermittent operated.

Japanese Patent Laid-Open No. 2007-192480 (Patent Document 1) discloses a technology that "an air conditioner comprises a suction port disposed in a front side of a housing of an indoor unit, a blow outlet disposed in a lower side of the housing, an air passage connecting the suction port and the blow outlet in the housing, a fan disposed in the air passage, and a movable panel movable between a first position where the suction port is clogged and a second position that extends from an upper end of the blow outlet to extend an upper wall of the air passage, the movable panel being configured in the second position when the air conditioner is driven. As a result, the air flowing along the movable panel is decelerated such that kinetic energy is converted into static pressure, thereby decreasing the rise of the static pressure of the fan to achieve energy-saving effect".

### DOCUMENT OF PRIOR ART

### Patent Document

Patent Document 1: Japanese Patent Laid-Open No. 2007-192480

### SUMMARY OF THE INVENTION

### Problems to be Solved by the Invention

In spite that the technology disclosed in Patent Document 1 can achieve energy-saving effect without impairing esthetic quality, however, Patent Document 1 has a problem that, when the internal of the air-conditioning apparatus is contaminated, the power consumption increases since heat exchange efficiency decreases and ventilation gets worse.

Therefore, an objective of the present invention is to provide a technology capable of suppressing the increase of power consumption in the air-conditioning apparatus due to internal contamination or the like.

### Technical Means to Solve the Problem

In the invention disclosed in the present application, the summary of the representative is briefly described as follows.

In an energy-saving assembly of one embodiment of the present invention, the energy-saving assembly has the shape of sheet and is provided with a first surface and a second surface, wherein the energy-saving assembly is formed with a hole penetrating through the first surface and the second surface. Moreover, the energy-saving assembly is formed of a first material and a first ceramic that emits far infrared ray. The first ceramic contains SiO₂, Fe₂O₃, Al₂O₃, MgO and CaO.

Moreover, in an energy-saving method of one embodiment of the present invention, an energy-saving assembly having the shape of sheet and being provided with the first surface and the second surface is employed, wherein the energy-saving assembly is formed with a hole penetrating through the first surface and the second surface, formed of a first material and a first ceramic that emits far infrared ray, and installed on an exterior side of an suction port of an air-conditioning apparatus. The first ceramic contains SiO₂, Fe₂O₃, Al₂O₃, MgO and CaO.

### Advantageous Effects of Invention

The inventions possesses the effects as follows.

By means of the embodiment of the present invention, the increase of the power consumption in the air-conditioning apparatus due to internal contamination or the like can be suppressed.

### BRIEF DESCRIPTION OF THE DRAWINGS

FIG. 1 shows a perspective view of an external appearance of an energy-saving assembly according to one embodiment of the present invention.
FIG. 2 is a plane view of the energy-saving assembly according to one embodiment of the present invention.
FIG. 3 is a bottom view of the energy-saving assembly according to one embodiment of the present invention.
FIG. 4 is a diagram illustrating the operation of the moment when installing the energy-saving assembly according to one embodiment of the present invention on the air-conditioning apparatus.
FIG. 5 is a plane view illustrating an energy-saving assembly according to another embodiment of the present invention.
FIG. 6 is a plane view of an energy-saving assembly according to another embodiment of the present invention.
FIG. 7 is a plane view of an energy-saving assembly according to another embodiment of the present invention.
FIG. 8 is a plane view of an energy-saving assembly according to another embodiment of the present invention.
FIG. 9 is a plane view of an energy-saving assembly according to another embodiment of the present invention.

### DETAILED DESCRIPTION OF THE PREFERRED EMBODIMENTS

The below are embodiments of the present invention explained by drawings. In the drawings, the same components are denoted with the same reference numerals in principle, and the repeated description will be omitted.

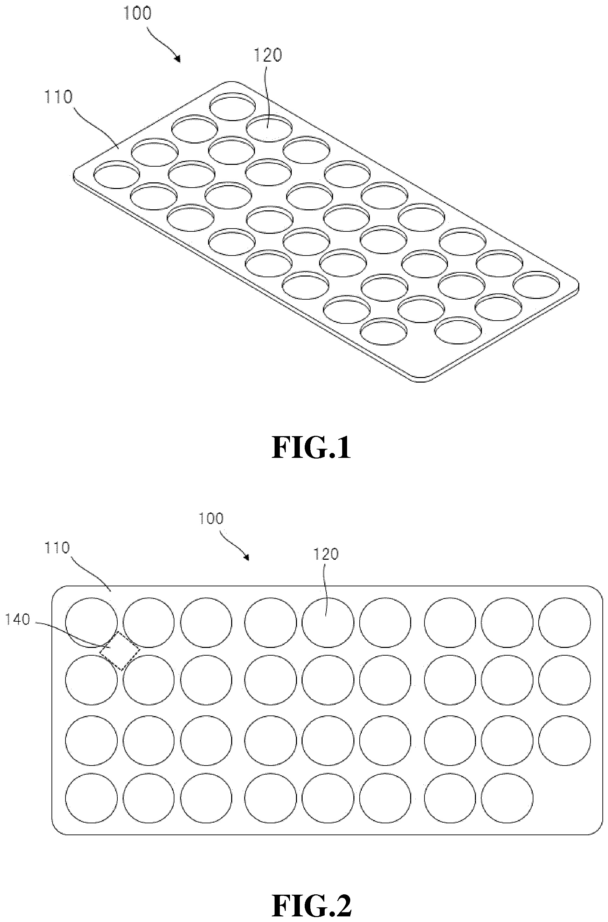

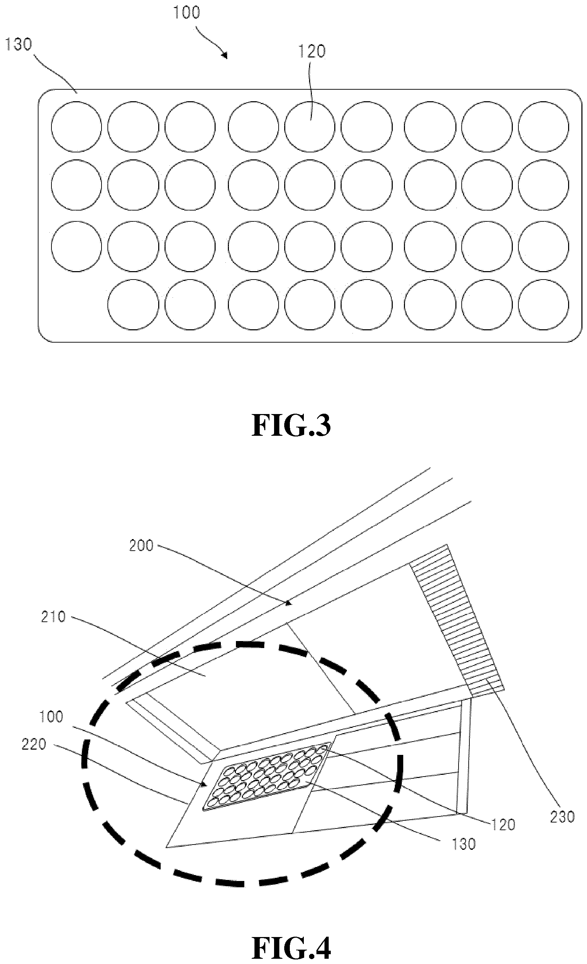

FIG. 1 shows a perspective view of an external appearance of an energy-saving assembly 100 according to one embodiment of the present invention. FIG. 2 is a plane view of the energy-saving assembly 100 according to the embodiment of the present invention. FIG. 3 is a bottom view of the energy-saving assembly 100 according to the embodiment of the present invention.

As shown in FIGS. 1 to 3, the energy-saving assembly 100 has the shape of sheet. In addition, the energy-saving assembly 100 has a quadrilateral shape (rectangular shape), and is provided with a first surface 110 and a second surface 130. Moreover, the four corners of the energy-saving assembly 100 are circular arc-shaped. Furthermore, the energy-saving assembly 100 may have a square shape.

In addition, circular holes 120 penetrating through the first surface 110 and the second surface 130 are formed as a plurality of lattice shape in the energy-saving assembly 100. The holes 120 are formed parallel to each other in the left-right direction. Moreover, the holes 120 are formed parallel to each other in the up-down direction. The distance between the adjacent holes 120 in the left-right direction is 2 mm to 5 mm. In addition, the distance between the adjacent holes 120 in the up-down direction is 2 mm to 5 mm. Then, a face portion 140 is defined as portion formed in a region surrounded by four holes 120, where the four holes are defined as two holes 120 being formed adjacent to each other in the left-right direction and two other holes 120 respectively being formed neighboring below said the two holes 120, or are defined as two holes 120 being formed adjacent to each other in the left-right direction and two other holes 120 respectively being formed neighboring above said the two holes 120. The face portion 140 is formed such that the strength of the energy-saving assembly 100 is enhanced. In addition, the content of ceramic relative to the overall size of the energy-saving assembly 100 can be increased. Accordingly, the energy-saving effect of the air conditioner 200 can be enhanced even if the energy-saving assembly 100 is miniaturized.

Moreover, a ratio of the area of the holes 120 (the total area of the holes 120) to the area of the entire energy-saving assembly 100 is in a range between 60% and 80%.

In the energy-saving assembly 100, a plurality of holes 120 are formed in a row. In addition, the rows of the plurality of holes 120 are formed parallel to the energy-saving assembly 100. In FIGS. 1 to 5, holes 120 in 4 rows × 9 columns are formed in the energy-saving assembly 100.

The energy-saving assembly 100 has a length of 37 cm to 40 cm in a long-side direction, a length of 17 cm to 20 cm in a short-side direction, and a thickness of 1 mm to 5 mm. Then, the area occupied by the holes 120 with respect to the entire energy-saving assembly 100 is 45% to 55%, and the area occupied by the portions without the holes 120 with respect to the entire energy-saving assembly 100 is 45% to 55%. Besides, the energy-saving assembly 100 may have a length of 10 cm to 100 cm in the long-side direction and a length of 5 cm to 10 cm in the short-side direction. Moreover, the thickness of the energy-saving assembly 100 may be 1 mm to 20 mm.

The energy-saving assembly 100 is made of a first material (elastomer (polyethylene or resin, etc.) or plastic) and a ceramic, wherein the ceramic is produced as an ion far infrared ray producing ceramic obtained by repeatedly mixing-crushing-sintering powders of thorium-based trace radioactive rare earth metal with deodorant and antibacterial effects and zirconium that emits far infrared ray, zirconium oxide, aluminum oxide, silicon dioxide and other ceramics. That is, the energy-saving assembly 100 is formed by mixing the first material into the ceramic so as to emit far infrared ray. In addition, the energy saving assembly 100 can be bent and curved. Besides, as described above, the content of ceramics per unit area is increased by allowing the area not occupied by the entire holes 120 in relation to the whole area of the energy-saving assembly 100 to be larger than 45% or more. Moreover, the content of ceramic per unit area on the overall size of the energy-saving assembly 100 can be increased by allowing the area of the holes 120 in relation to the whole area of the energy-saving assembly 100 to be smaller than 55% or less during the amount of air aspirated from the suction port of the air-conditioning apparatus 200 is secured. Therefore, the strength of the energy-saving assembly 100 can be maintained, and damage in installation can be easily prevented. In addition, even if the area of the energy-saving assembly 100 is reduced, energy-saving effect of the air-conditioning apparatus 200 can be also achieved. Furthermore, not only can the present invention reduce the area of the energy-saving assembly 100 to simplify the installation of the energy-saving assembly 100, but also the energy-saving assembly 100 can be installed on various shapes of air-conditioning apparatus 200.

As the first material, ABS resin (ABS), High-density polyethylene (HDPE), Low-density polyethylene (LDPE), polyamide (PA), polycarbonate (PC), polyethylene terephthalate (PET), acrylic resin (PMMA), polypropylene (PP), polystyrene (PS), vinyl chloride (PVC) and AS resin (SAN) and so on can be used.

In addition, instead of mixing the first material into the ceramic, the energy-saving assembly 100 may be formed of an elastomer (polyethylene or resin, etc.), and only the surface of the first surface 110 may be coated with the ceramic. Moreover, the energy-saving assembly 100 may be formed of an elastomer (polyethylene or resin, etc.), and only the surface of the first surface 110 may contain the ceramic at a predetermined ratio (10% to 90%).

FIG. 4 is a diagram illustrating the operation that installs the energy-saving assembly on the air-conditioning apparatus according to one embodiment of the present invention. In addition, FIG. 4 is schematically drawing for explanation convenience.

As shown in FIG. 4, the energy-saving assembly 100 is installed on an exterior side of the air-conditioning apparatus 200. In the ceiling-mounted air-conditioning apparatus 200 shown in FIG. 4, the energy-saving assembly 100 is placed on the suction cover 220 after the suction cover 220 has been removed, and then the suction cover is closed. Thus, the energy-saving assembly 100 is installed in the air-conditioning apparatus 200 by being sandwiched between the suction cover 220 and the suction port 210. The exterior side is referred to a side in an opposite direction of the interior side of the air-conditioning apparatus 200.

The energy-saving assembly 100 is installed in the air-conditioning apparatus 200 by enabling the second surface 130 of the energy-saving assembly 100 and the suction port 210 of the air-conditioning apparatus 200 to face each other.

The air sucked through the suction cover 220 passes through the holes 120 of the energy-saving assembly 100 to be sucked toward the suction port 210. After that, the air is blown out from the blow outlet 230 after being heat-exchanged by the heat exchanger inside the air-conditioning apparatus 200.

It is known that various molecules such as water molecules are existed in the air. The molecules passing through the holes 120 of the energy-saving assembly 100 are irradiated by far infrared ray through the energy-saving assembly 100. The far infrared ray radiated from the ceramic in the energy-saving assembly 100 make the molecules vibrate actively. That is, molecules passing through the holes 120 of the energy-saving assembly 100 are irradiated by far infrared ray from the energy-saving assembly 100 to active the molecules vibration so as to make the heat exchange of molecules easier. It is noted that in a circumstance that water (H₂O) is contained in the air, for example, the bonding distance between the oxygen (O) atom and the hydrogen (H) atom becomes shorter because the volume of the water molecule becomes smaller.

In the example shown in FIG. 4, the molecules of air sucked in by the suction port 210 of the air-conditioning apparatus 200 are irradiated by far infrared ray from the energy-saving assembly 100. The area of the suction port 210 is 5 to 10 times of the area of the blow outlet 230 that blows out cool air or warm air. Therefore, the speed of the air from outside of the air-conditioning apparatus 200 toward the suction port 210 is 1/5 to 1/10 times of the speed of the air on the blow outlet 230. The molecules in the air are irradiated by far infrared ray through the energy-saving assembly 100 during the period that the air flows from the exterior side of the air-conditioning apparatus 200 to the suction port 210.

As described above, the molecules irradiated by far infrared ray is easy in heat exchange. Therefore, the air can be effectively heat exchanged by passing through the heat exchanger in the interior of the air-conditioning apparatus 200 even though that the ventilation of environment is deteriorated due to internal contamination or the like in the air-conditioning apparatus 200. Accordingly, the heat exchange rate of the air-conditioning apparatus 200 is improved to achieve energy-saving effect of the air-conditioning apparatus 200.

In addition, the area of the suction port 210 may be twice or more of the area of the energy-saving assembly 100. In this case, a plurality of energy-saving assemblies 100 are installed on the suction port 210 in a way that the longer sides of the plurality of energy-saving assemblies 100 are adjacent to each other. Accordingly, even if the area of the suction port 210 is 2 times or more of the area of the energy-saving assembly 100, the molecules of the air sucked into the air-conditioning apparatus 200 can be effectively heat-exchanged by the heat exchanger inside the air-conditioning apparatus 200 so as to achieve energy-saving effect of the air-conditioning apparatus 200. In addition, according to the shape of the suction port 210, the plurality of energy-saving assemblies 100 may be installed on the suction port 210 in a way that the shorter sides of the plurality of energy-saving assemblies 100 are adjacent to each other.

As a result, in an example that explains the efficiency of the energy-saving assembly 100 in a circumstance that the temperature of the ceiling-mounted air-conditioning apparatus 200 is set to 10.0 degrees, it is found the temperature of the air blowing from the blow outlet 230 before the installation of the energy-saving assembly 100 is 6.0 degrees while the temperature of the air blown from the blow outlet 230 is improved to 3.3 degrees after the energy-saving assembly 100 is installed. It is appreciated from this that the installation of the energy-saving assembly 100 in the ceiling-mounted air-conditioning apparatus 200 can improved the heat exchange efficiency to be about 26% in energy saving rate.

Although the case of the air-conditioning apparatus 200 is explained for a ceiling-mounted type, the air-conditioning apparatus 200 can be a wall-mounted type as well. In this case, the energy-saving assembly 100 is installed in the air-conditioning apparatus 200 by being sandwiched between the filter and the suction port of the air-conditioning apparatus 200.

Moreover, in the case that the air-conditioning apparatus 200 is a floor-standing type, the energy-saving assembly 100 is placed on the suction port at the lower portion of the floor-standing air-conditioning apparatus 200.

Furthermore, in the case that the air-conditioning apparatus 200 is installed for a demonstration shelf in a food market, an adhesive tape is adhered to the first surface 110 of the energy-saving assembly 100 such that the energy-saving assembly 100 is fixed to the suction port 210. For example, the worker adheres an adhesive tape on the first surface 110 to secure the energy-saving assembly 100 to the suction port 210.

Besides, the surface of the second surface 130 may be coated with adhesive material. In addition, an adhesive sheet may be provided on the surface side of the second surface 130. Therefore, the energy-saving assembly 100 can be secured to the suction port 210 of the air-conditioning apparatus 200 without attaching an adhesive tape.

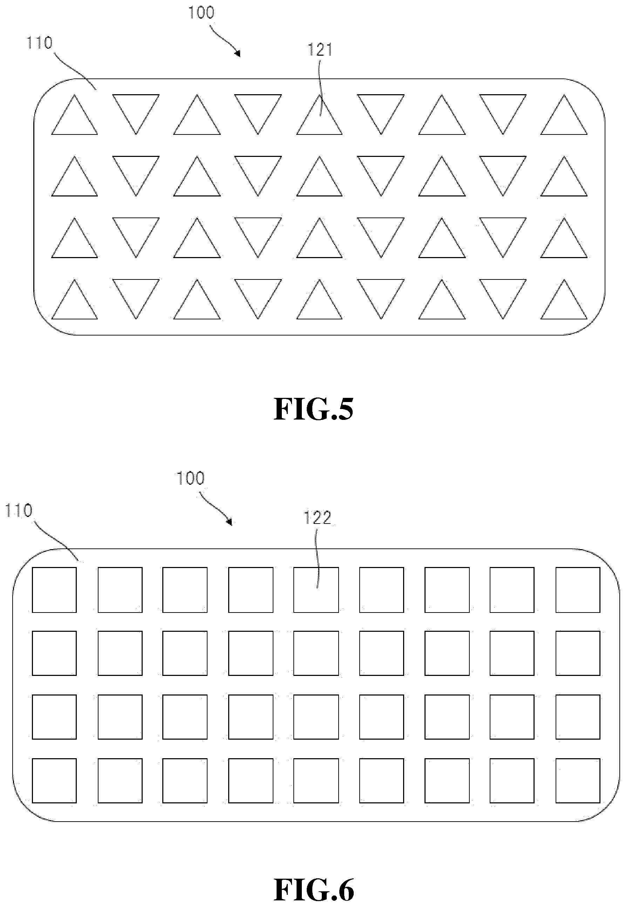

In addition, as shown in FIG. 5, the hole 121 formed in the energy-saving assembly 100 may be in a triangular shape. In this case, the holes 121 are arranged in a manner that the directions of triangular shapes with longer-side being adjacent to each other are opposite to each other (difference of 180°).

Moreover, as shown in FIG. 6, the hole 122 formed in the energy-saving assembly 100 is in a quadrilateral shape. In this case, the holes 122 are formed as a lattice in the energy-saving assembly 100.

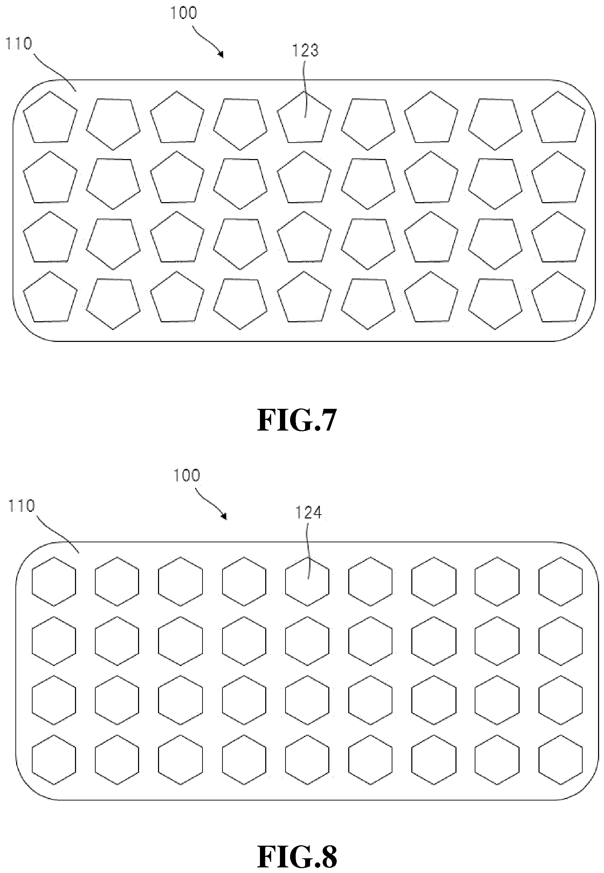

Further, as shown in FIG. 7, the hole 123 formed in the energy-saving assembly 100 may be in a pentagonal shape. In this case, the holes 123 are arranged in a manner that the directions of pentagonal shapes with longer-side being adjacent to each other are opposite to each other (difference of 180°).

Furthermore, as shown in FIG. 8, the hole 124 formed in the energy-saving assembly 100 is in a hexagonal shape. In this case, the holes 124 are formed as a lattice in the energy-saving assembly 100.

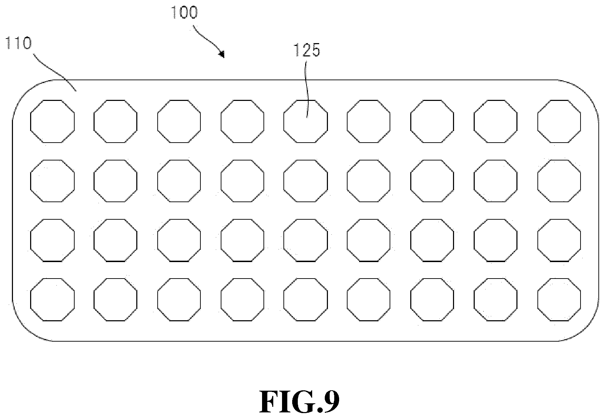

Additionally, As shown in FIG. 9, the hole 125 formed in the energy-saving assembly 100 is in an octagonal shape. In this case, the holes 125 are formed as a lattice in the energy-saving assembly 100.

Next, a preferred embodiment of the ceramic contained in the energy-saving assembly 100 will be described.

The energy-saving assembly 100 is preferably formed of the abovementioned first material and the first ceramic that emits far infrared ray, and the first ceramic preferably contains silicon oxide (SiO₂), iron oxide (Fe₂O₃), aluminum oxide (Al₂O₃), magnesium oxide (MgO) and calcium oxide (CaO). In this case, the emission rate of far infrared ray emitted from the first ceramic at room temperature can be increased. Therefore, due to far infrared, the molecules of the air passing through the holes 120 can be easily heat-exchangeable.

As the first ceramic, the first ceramic powder can be used. As the first ceramic powder, various compositions of ceramic powder can be used. An example of the composition of the first ceramic powder is shown in Table 1.

**Table 1**

| composition | content ( wt.% ) |
|---|---|
| SiO₂ | 43.81 |
| Fe₂O₃ | 8.23 |
| Al₂O₃ | 0.95 |
| MgO | 42.99 |
| CaO | 1.06 |
| Loss on ignition | 1.35 |

In the example shown in Table 1, the first ceramic powder contains 43.81% by weight ratio of SiO₂, 8.23% by weight ratio of Fe₂O₃, 0.95% by weight ratio of Al₂O₃, 42.99% by weight ratio of MgO and 1.06% by weight ratio of CaO. Besides, in Table 1, the term of "loss on ignition" refers to the material of volatile substances contained in the first ceramic such as a mass of organic substances. Other term such as Ig. Loss can be applied.

Moreover, taking the above composition of the first ceramic powder in Table 1 as a standard, other composition different from the standard in a range of ± 3% for the first ceramic powder can also enable the emission rate of far infrared ray emitted from the first ceramic at room temperature to be larger such that far infrared can make the molecules of the air be easily heat-exchangeable. In this case, the first ceramic powder contains SiO₂ in an amount of 42 to 45% by weight ratio, Fe₂O₃ in an amount of 8.0 to 8.5% by weight ratio, Al₂O₃ in an amount of 0.92 to 0.98% by weight ratio, MgO in an amount of 42 to 44% by weight ratio and CaO in an amount of 1.0 to 1.1% by weight ratio.

An example explaining the particle size distribution of the first ceramic powder shown in Table 1 is shown in Table 2. In addition, the particle size distribution shown in Table 2 can be used by the conventional device.

**Table2**

| mesh | content ( wt.% ) |
|---|---|
| 35 | 0.0 |
| 48 | 0.0 |
| 65 | 0.0 |
| 100 | 0.3 |
| 150 | 5.2 |
| 200 | 7.6 |
| 270 | 13.8 |
| PAN | 73.1 |
| Total | 100.0 |

As shown in Table 2, the content of particles in the first ceramic powder shown in Table 1 that can not pass through a 65 mesh screen is with 0.0% by weight ratio. The content of the particles that passed through the 65 mesh screen but can not pass through a 100 mesh screen is with 0.3 % by weight ratio. The content of the particles that passed through the 100 mesh screen but can not pass through a 150 mesh screen is with 5.2 % by weight ratio. In addition, the content of particles that passed through the 150 mesh screen but can not pass through a 200 mesh screen is with 7.6% by weight ratio. The content of particles that passed through the 200 mesh screen but can not pass through a 270 mesh screen is with 13.8% by weight ratio. The content of particles that passed through the 270 mesh screen is with 73.1% by weight ratio. In addition, mesh is in a JIS standard.

As shown in Table 2, since the content of the particles passing through the 270 mesh screen is with 73.1% by weight ratio, the average particle size of the first ceramic powder is small. Therefore, the surface area per unit volume of the first ceramic powder is increased so that the emission rate that the far infrared ray is emitted from the first ceramic at room temperature is increased Therefore, due to far infrared, the molecules of the air are to be easily heat-exchangeable.

Besides, the energy-saving assembly 100 is formed of the first material and the first ceramic, and the content of the first material is from 75% by weight ratio to 90% by weight ratio, and the content of the first ceramic is preferably from 10% by weight ratio to 25% by weight ratio. In this case, the energy-saving assembly 100 can be bent and curved, and the emission rate that the first ceramic emits far infrared ray at room temperature becomes larger. Therefore, due to far infrared, the molecules of the air are to be easily heat-exchangeable.

In addition, it is preferable that the first ceramic does not contain any one of titanium oxide (TiO₂), cobalt oxide (CoO₃), and potassium oxide (K₂O). In the case where the first ceramic does not contain any one of TiO₂, CoO₃, and K₂O, the emission rate that the first ceramic emits far infrared ray at room temperature becomes larger Therefore, due to far infrared, the molecules of the air are to be easily heat-exchangeable.

In addition, the energy-saving assembly 100 is preferably formed of the abovementioned first material, the abovementioned first ceramic and second ceramic. The second ceramic containing elbite tourmaline, i.e., lithium tourmaline is preferable. In this case, since the lithium tourmaline has the pyroelectric effect and the piezoelectric effect, the second ceramic can be electrostatically charged to generate a trace amount of negative ions. Therefore, due to the negative ions, the air passing through the holes 120 is to be easily heat-exchangeable.

Elbite tourmaline is represented by the following chemical formula (Formula 1). In addition, the wt.% and the mol.% of each element contained in lithium tourmaline are shown in Table 3.

Na(Li, Al)₃Al₆(BO₃)₃Si₆O₁₈(OH)₄ (1)

**Table 3**

| | lithium tourmaline Na(Li, Al)₃Al₆(BO₃)₃Si₆O₁₈(OH)₄ | | |
|---|---|---|---|
| Element | Wt.% | Mol.% | weight |
| Na | 2.53 | 1.85 | 22.9898 |
| Li | 2.30 | 5.56 | 20.823 |
| Al | 17.86 | 11.11 | 161.889 |
| B | 3.58 | 5.56 | 32.43 |
| Si | 18.59 | 11.11 | 168.5130 |
| O | 54.70 | 57.41 | 495.9814 |
| H | 0.44 | 7.40 | 4.0316 |
| Total | 100.00 | 100.00 | 906.6578 |

In addition, the abovementioned chemical formula (formula 1) is in the following mentioned chemical formula (formula 2), x means 0 ≦ x ≦ 1.

Na(Li₁₋ₓAlₓ)₃Al₆(BO₃)₃Si₆O₁₈(OH)₄ (2)

In a situation that the energy-saving assembly 100 is formed of the first material, the first ceramic, and the second ceramic, a ratio of the weight percentage of the second ceramic to the weight percentage of the first ceramic is preferable to be 1/14, that is, 0.071. Therefore, the emission rate that the far infrared ray is emitted from the first ceramic at room temperature is increased. The second ceramic can generate a trace amount of negative ions. Therefore, due to far infrared ray and negative ions, the air is to be easily heat-exchangeable.

Furthermore, it is noted that the ratio of the weight percentage of the second ceramic to the weight percentage of the first ceramic is not only to be limited to 1/14, i.e., 0.071. It can takes the value of 0.071 as a standard, the ratio in the range of ± 3% can achieve the goal that the air is easy for heat-exchange by far infrared ray and negative ions. In this case, the ratio of the weight percentage of the second ceramic to the weight percentage of the first ceramic is in a range between 0.069 and 0.074.

In addition, the same as the first ceramic, the second ceramic powder can be used to be the second ceramic. Moreover, lithium tourmaline (ie, elbaite tourmaline) of the second ceramic, can also be replaced by schorl tourmaline in following chemical formula (Formula 3) or by dravite tourmaline in following chemical formula (formula 4). Further, the second ceramic may have various tourmalines represented by the following chemical formula (formula 5).

NaFe₃Al₆(BO₃)₃Si₆O₁₈(OH)₄ (Formula 3)

NaMg₃Al₆(BO₃)₃Si₆O₁₈(OH)₄ (Formula 4)

(Na, Ca, K)(Al, Fe, Li, Mg, Mn)₃(Al, Cr, Fe, V)₆(BO₃)₃Si₆O₁₈(OH)₄ (Formula 5)

Moreover, in the case that the energy-saving assembly 100 is formed of the first material, the first ceramic, and the second ceramic, it is preferable that the content of the first material is from 69% by weight ratio to 87% by weight ratio, the content of the first ceramic is from 10% by weight ratio to 25% by weight ratio, and the content of the second ceramic is preferably from 3% by weight ratio to 6% by weight ratio. In this case, the energy-saving assembly 100 can be bent and curved. Therefore, due to far infrared ray and negative ions, the air is to be easily heat-exchangeable.

In addition, the energy-saving assembly 100 is optional to not contain the first ceramic, and is formed only by the first material and the second ceramic. In this case, the energy-saving assembly 100 can be bent and curved. Therefore, due to negative ions generated from the second ceramic, the air is to be easily heat-exchangeable.

### Advantageous Effects of Invention

The energy-saving assembly 100 according to the embodiments of the present invention is in the sheet-shape and is formed of the first material and the ceramic emitting far infrared ray such that the air sucked into the air-conditioning apparatus 200 is easily heat-exchangeable. Accordingly the increase of power consumption because of the deterioration of ventilation in the air-conditioning apparatus 200 due to internal contamination can be suppressed.

As described above, the invention made by the inventors has be specifically described based on the embodiments. However, the present invention is not limited to the embodiments described above, and it goes without saying that various modifications can be made without departing from the scope of the invention.

Moreover, it should be noted that the above-described embodiments are described in detail for easy understanding of the present invention, and are not limited to those having the entire illustrated configuration. For example, a part of the configuration of one embodiment may be replaced by a configuration of another embodiment. In addition, it is also possible to add a configuration of another embodiment to the configuration of an embodiment. Moreover, a part of the configuration of each of the embodiments may be added, deleted, or replaced with another configuration.

## Claims

1. An energy-saving assembly, the energy-saving assembly being configured in a sheetshape and comprising a first surface and a second surface, wherein the energy-saving assembly is formed with a hole penetrating through the first surface and the second surface, and the energy-saving assembly being formed of a first material and a first ceramic that emits far infrared ray, and the first ceramic contains SiO₂, Fe₂O₃, Al₂O₃, MgO and CaO.

2. The energy-saving assembly of claim 1, wherein the first ceramic contains:
SiO₂ from 42 to 45 % by weight,
Fe₂O₃ from 8.0 to 8.5 % by weight,
Al₂O₃ from 0.92 to 0.98 % by weight,
MgO from 42 to 44 % by weight and
CaO from 1.0 to 1.1 % by weight.

3. The energy-saving assembly of claim 1, wherein the energy-saving assembly is formed of the first material, the first ceramic and a second ceramic, the second ceramic containing elbite tourmaline.

4. The energy-saving assembly of claim 3, wherein the second ceramic contains elbite tourmaline represented by the following chemical formula (1):
Na(Li, Al)₃Al₆(BO₃)₃Si₆O₁₈(OH)₄ (1).

5. The energy-saving assembly of claim 3, wherein a ratio of the weight percentage of the first ceramic to the weight percentage of the second ceramic is in a range between 0.069 and 0.074.

6. An energy-saving method that uses an energy-saving assembly configured in a sheetshape and comprising a first surface and a second surface, wherein the energy-saving assembly is formed with a hole penetrating through the first surface and the second surface, formed of a first material and a first ceramic that emits far infrared ray and installed on an outside of an suction port of an air-conditioning apparatus, and the first ceramic contains SiO₂, Fe₂O₃, Al₂O₃, MgO and CaO.

7. The energy-saving method of claim 6, wherein the first ceramic contains:
SiO₂ from 42 to 45 % by weight,
Fe₂O₃ from 8.0 to 8.5 % by weight,
Al₂O₃ from 0.92 to 0.98 % by weight,
MgO from 42 to 44 % by weight and
CaO from 1.0 to 1.1 % by weight.

8. The energy-saving method of claim 6, wherein the energy-saving assembly is formed of the first material, the first ceramic, and a second ceramic, the second ceramic containing elbite tourmaline.

9. The energy-saving method of claim 8, wherein the second ceramic contains elbite tourmaline represented by the following chemical formula (1):
Na(Li, Al)₃Al₆(BO₃)₃Si₆O₁₈(OH)₄ (1)..

10. The energy-saving method of claim 8, wherein a ratio of the weight percentage of the first ceramic to the weight percentage of the second ceramic is in a range between 0.069 and 0.074.

11. The energy-saving method of claim 6, wherein the energy-saving assembly is installed between the suction port and a suction cover of the air-conditioning apparatus.

12. The energy-saving method of claim 6, wherein the energy-saving assembly is installed between the suction port and a filter of the air-conditioning apparatus.
